(19) **Europäisches Patentamt European Patent Office Office européen des brevets**

(11) **EP 4 474 856 A1**

(12) **EUROPEAN PATENT APPLICATION**

(43) Date of publication:
**11.12.2024  Bulletin 2024/50**

(21) Application number: **23177164.3**

(22) Date of filing: **05.06.2023**

(51) International Patent Classification (IPC):
*G01S 7/48* (2006.01)    *G01S 17/931* (2020.01)
*G01S 17/42* (2006.01)    *G01S 7/484* (2006.01)
*G01S 17/58* (2006.01)

(52) Cooperative Patent Classification (CPC):
**G01S 7/4808; G01S 7/484; G01S 17/42;**
G01S 17/58; G01S 17/931

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Valeo Vision**
**93012 Bobigny Cedex (FR)**

(72) Inventors:
• **RENAUD, Pierre**
  **93012 BOBIGNY (FR)**

• **MIMOUN, Mickael**
  **93012 BOBIGNY (FR)**
• **BEDDAR, Sidahmed**
  **93012 BOBIGNY (FR)**
• **GOURDON, Matheo**
  **93012 BOBIGNY (FR)**
• **PIQUARD, Geoffrey**
  **93012 BOBIGNY (FR)**

(74) Representative: **Valeo Visibility**
**IP department**
**34, rue Saint André**
**93012 Bobigny Cedex (FR)**

(54) **AUTOMOTIVE LIGHTING DEVICE AND METHOD FOR DETECTING AN OBJECT**

(57)    The present invention refers to a method for detecting an outer object by an automotive lighting device, the automotive lighting device comprising a solid-state light source and a driver element configured to provide the solid-state light source with a light pattern modulated with a control signal, the light pattern contributing to an automotive lighting function. The method comprises the steps of operating the driver element to create a first control signal configured to modulate the light pattern with a first frequency, a first amplitude and a first duty cycle value, operating the light source to project the light pattern modulated with the first control signal, receiving information of light reflected by an outer object, processing the information of reflected light to detect a first distance from the outer object, obtaining a vehicle speed, calculating a new distance using the vehicle speed and operating the driver element to create a further control signal configured to modulate the light pattern with a further frequency, a further amplitude lower than the previous amplitude and a further duty cycle value which is higher than the previous duty cycle value. The steps of operating the light source with the further control signal, receiving information and processing information to detect the presence of the outer object are repeated.

FIG. 1

## Description

## TECHNICAL FIELD

This invention is related to the field of automotive luminous devices, and more particularly, to the ones used to detect objects surrounding the vehicle.

## STATE OF THE ART

Driving assistance comprises the use of sensors to inform the driver (or to directly inform the vehicle) of objects surrounding the vehicle. This is extremely useful for autonomous driving, but also for maned vehicles, where driving aids are helpful and are becoming mandatory in new regulations.

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

Visible light is also used to detect outer objects, using LiDAR (Light Detection And Ranging) technology. However, to use this technology, a high frequency signal must be created to control the light emission devices. This high frequency signal is subject to a high SNR (signal to noise ratio) and it is sometimes difficult to detect the reflected light under very sunny conditions.

Detection range and precision are opposite features: a good detection range feature needs a low frequency and high amplitude, while a good precision range needs a high frequency and low amplitude. Therefore, it is not possible to create a configuration that provides a good detection range and a good precision at the same time.

The present invention provides a way of solving this problem.

## DESCRIPTION OF THE INVENTION

The invention provides an alternative solution for detecting objects in an automotive luminous device by a method for detecting an outer object by an automotive lighting device, the automotive lighting device comprising a solid-state light source and a driver element configured to provide the solid-state light source with a light pattern modulated with a control signal, wherein the light pattern contributes to provide a lighting function, and wherein the method comprises the steps of

operating the driver element to create a first control signal configured to modulate the light pattern with a first frequency, a first amplitude and a first duty cycle value;
operating the light source to project the light pattern modulated with the first control signal;
receiving information of light reflected by an outer object;
processing the information of reflected light to detect a first distance from the outer object;
obtaining a vehicle speed;
calculating a new distance using the vehicle speed;
operating the driver element to create a further control signal configured to modulate the light pattern with a further frequency, a further amplitude lower than the previous amplitude and a further duty cycle value which is higher than the previous duty cycle value; and
repeating the steps of operating the light source with the further control signal, receiving information and processing information to detect the presence of the outer object.

With this method, an automotive lighting device performing regulated automotive lighting functions is suitable for performing both the role of regulated lighting and the role of LiDAR sensor. The method starts with a configuration that provides a detection range which is enough for current driving systems. When an object is detected, amplitude is reduced to improve the precision in the detection of the object. This is done when the distance is lower than a threshold, since this reduction in the amplitude also reduces the detection range of the emitted light.

In some particular embodiments, the light sources are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation.

The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the method further comprises the step of
when the calculated distance is lower than a threshold value, modifying the calculation of the further control signal, when the new further control signal has a frequency higher than the first frequency, an amplitude lower than the previous amplitude and a duty cycle value higher than the previous duty cycle value.

A reduction in frequency is not mandatory, but when a threshold distance is reached, it is advantageous since it helps to keep a consistent result when the amplitude is reduced.

In some particular embodiments, the threshold value is comprised between 80% and 90% of the first distance.

For distances above the threshold value, there is no advantage in reducing frequency.

In some particular embodiments, the relation between the amplitude and the distance in the new further control signal is provided by the quotient of the new distance divide by the first distance raised to a first power value. In some particular embodiments, the first power value is comprised between 2 and 8.

This expression minimizes the loss in detection range for a second range of distances from the outer object.

In some particular embodiments, the relation between the amplitude and the distance in the further control signal is provided by the quotient of the new distance divide by the first distance raised to a second power value, wherein the second power value is higher than the first power value. In some particular embodiments, the second power value is comprised between 12 and 20.

This expression minimizes the loss in detection range for a first range of distances from the outer object.

In some particular embodiments, the amplitude and duty cycle of each control signal fulfils a relation so that the illuminance emitted by the lighting device is constant.

The illuminance indicates the luminous flux which strikes a surface. The standard unit to measure illumination intensity is lux: $1\,lx = 1\,lm/m^2$ (lumens per square meters). When the amplitude is reduced, the illuminance decreases. To keep it constant, the duty cycle of the control signal is increased, so that the average illuminance is constant.

In some particular embodiments, each cycle comprises a pattern code expressed by a series of digital pulses, and wherein the duty cycle is defined by replacing each digital pulse by a code which comprises a percentage of the digital pulse.

In some particular embodiments, the first frequency is equal or greater than 10 MHz.

A frequency of 10 MHz provides a pulse duration of 100 ns, which would correspond to a precision in the order of tenths of meters, which could be acceptable for a first attempt. Once the distance is lower, the frequency may be increased to obtain a better precision.

In some particular embodiments, the lighting function is a passing beam lamp or a driving beam lamp.

In a second inventive aspect, the invention provides an automotive lighting device comprising

   a solid-state light source configured to perform a lighting function;
   a driver element configured to provide the solid-state light source with a light pattern modulated with a control signal calculated by a method according to the first inventive aspect, wherein the light pattern contributes to provide a lighting function;
   a sensor element configured to receive light emitted by the solid-state light source and reflected by an outer object; and
   a control unit configured to process the information received by the sensor.

In some particular embodiments, the solid-state light source comprises a blue electroluminescent element, preferably a blue LED chip and a wavelength conversion material, such as a phosphor.

Light emitting diodes (LEDs) are preferred to laser sources, which are more costly.

The use of a blue LED chip increases the efficiency of the light source, and the wavelength conversion material, such as a phosphor layer, provides the wavelength necessary for the final emitted light to be according to regulations. Further, a wavelength conversion material has a reaction time long enough that it is not able to follow high frequency driving necessary for an output in the range of MHz, thereby forming a low pass filter on the converted wavelengths. The blue electroluminescent element, in particular in the case of a blue LED chip does not limit the bandwidth in a similar fashion; therefore, although the light will appear in an allowable colour, only the blue light will carry the information

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

   Figure 1 shows a first step of a method according to the invention.

   Figure 2 shows the relation between the distance and the amplitude of the control signal in a particular embodiment of a method according to the invention.

Figures 3 and 4 show the evolution of the duty cycle in a particular embodiment of a method according to the invention.

In these figures, the following reference numbers have been used:

| | |
|---|---|
| 1 | Outer object |
| 2 | Control unit |
| 3 | Receiving sensor |
| 4 | First line |
| 5 | Second line |
| 10 | Automotive lighting device |
| 100 | Automotive vehicle |

## DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

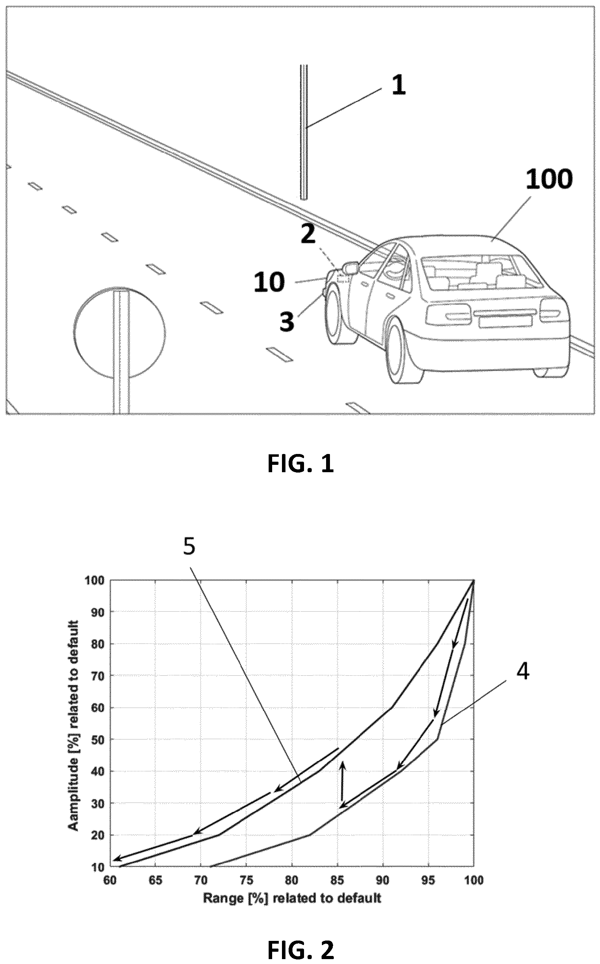

Figure 1 shows a first step of a method according to the invention.

A user is driving an automotive vehicle 100 at 20 m/s. This automotive vehicle 100 has an automotive lighting device 10 according to the invention, with a plurality of LEDs commanded by a driver element.

The driver element commands the LEDs to project a low beam light pattern, modulated with a first control signal. This first control signal has a frequency of 10 MHz, a maximal amplitude of 1 W and a duty cycle value of 5%. With these values, the average illuminance of the light emitted by the LEDs for this lighting function fulfils the automotive regulations concerning to lighting.

Also, with these values, compromise between detection range and precision is optimal. In this case, detection range is 40m.

When an object 1 is detected by the reflection of the light emitted by the LEDs, a control unit 2 located in the vehicle 100 receives the data from the receiving sensor 3, and calculates a first distance from the outer object 1.

Since the control unit 2 also receives the vehicle speed, it sends a command to the driver element to modify some parameters of the control signal as a function of the estimated distance.

Figure 2 shows the relation between the distance and the amplitude of the control signal in a particular embodiment of a method according to the invention.

In this figure, there are two graphics. The first line 4 shows the relation between the distance and the amplitude of the control signal when the distance is comprised between 0.85 times and 1 time the first distance.

In the previous example, this first line 4 would be used to calculate the amplitude of the control signal when the distance goes from 40 m (this is the first distance) and 34 m (which corresponds to 0.85 times the first distance).

0.05 seconds later, the estimated distance will be 1 m lower, since at 20 m/s, in 0.05 seconds, the vehicle advances 1 m. This means that the new distance is 0.975% of the original distance. According to the formula provided by the first line 4, the new amplitude value corresponding to this new distance is 70% of the original amplitude, so the new amplitude is 0.70 W. If the duty cycle value was not changed, the average illuminance would be 70% of the original average illuminance. To keep the average illuminance constant, the duty cycle is increased to 1.42 times the original duty cycle value, i.e., to 7.1%.

This first line 4 is a plurality of linear approximations of different discrete points, due to the fact that in this particular embodiment, the duty cycle can only be modified in discrete steps, as will be shown below. The mathematical formula of the discrete points is

$$A = A_1 \cdot \left(\frac{d}{d_1}\right)^{\alpha}$$

Wherein A is the amplitude, A1 is the first amplitude, d is the distance, d1 is the first distance and $\alpha$ is a first power value which in this case is 17.

When the distance has reached the value of 0.85 times the first distance, the amplitude starts to be calculated by a second line 5, which is also a plurality of linear approximations of different discrete points. The mathematical formula of the discrete points is

$$A = A_1 \cdot \left(\frac{d}{d_1}\right)^{\beta}$$

Wherein A is the amplitude, A1 is the first amplitude, d is the distance, d1 is the first distance and $\beta$ is a second power value which is always lower than the first power value, and in this case is 5.

In this second case, frequency of the control signal is increased, and this makes the amplitude of the signal be reduced as a consequence of this frequency increase, since the amplitude value does not have time to reach the maximum nominal value.

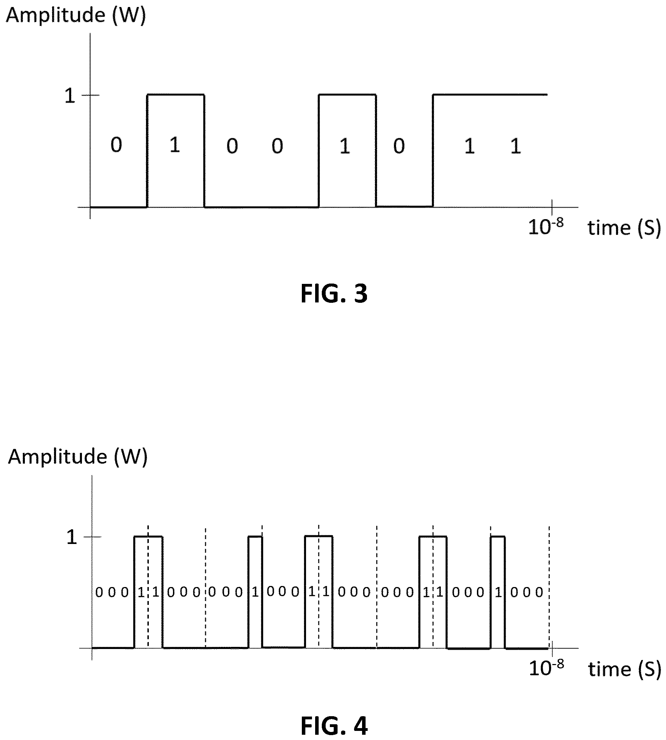

Figures 3 and 4 show the evolution of the duty cycle. To explain this evolution, an original digital pattern is shown in Figure 3. This digital pattern responds to an 8-bit digital pattern that has the sequence 0-1-0-0-1-0-1-1. This original pattern is considered as the 50% of the duty cycle (since 50% of the whole signal corresponds to positive values).

However, the duty cycle may be decreased without losing information. The way to do it is replacing the "zero" bits by a known digital sub-sequence and the "one" bits by a different but also know digital sub-sequence, in the following way:

Original duty cycle: 50%
Replacing zeroes by 0-0-1 and ones by 1-0-0: 33.3%
Replacing zeroes by 0-0-0-1 and ones by 1-0-0-0: 25%
Replacing zeroes by 0-0-0-0-1 and ones by 1-0-0-0-0: 20%
Replacing zeroes by 0-0-0-0-0-1 and ones by 1-0-0-0-0-0: 16.7%
Replacing zeroes by 0-0-0-0-0-0-1 and ones by 1-0-0-0-0-0-0: 14.3%
Replacing zeroes by 0-0-0-0-0-0-0-1 and ones by 1-0-0-0-0-0-0-0: 12.5 %
Replacing zeroes by 0-0-0-0-0-0-0-0-1 and ones by 1-0-0-0-0-0-0-0-0: 11.1 %
Replacing zeroes by 0-0-0-0-0-0-0-0-0-1 and ones by 1-0-0-0-0-0-0-0-0-0: 10%

Hence, to achieve the duty cycle of 5%, which was the one used in the embodiment of Fig. 1, zeroes should be replaced by 0-0-0-0-0-0-0-0-0-0-0-0-0-0-0-0-0-0-0-1, while ones should be replaced by 1-0-0-0-0-0-0-0-0-0-0-0-0-0-0-0-0-0-0-0.

Figure 4 illustrates the result of an example of this change, in particular to the 25% of duty cycle.

Then, the new control signal has a lower amplitude and a higher duty cycle value, thus improving precision at a cost of reducing detection range.

As has been explained previously, duty cycle is increased to compensate the decrease of amplitude, so that the total illuminance is kept constant. This is the reason why the relation between amplitude and distance is only a succession of digital pairs of values: the first value corresponds to 100% amplitude and 5% duty cycle (that would correspond to 5% of effective cycle). The second value corresponds to 90% of amplitude and 5.6% of duty cycle (that would correspond also to 5% of effective cycle). Next one would correspond to 80% of amplitude and 6.25% of duty cycle (that would correspond also to 5% of effective cycle). The rest of combinations always provide the same value of effective cycle, which is proportional to the illuminance.

## Claims

1. Method for detecting an outer object (1) by an automotive lighting device (10), the automotive lighting device (10) comprising a solid-state light source and a driver element configured to provide the solid-state light source with a light pattern modulated with a control signal, wherein the light pattern contributes to provide a lighting function, and wherein the method comprises the steps of

operating the driver element to create a first control signal configured to modulate the light pattern with a first frequency, a first amplitude and a first duty cycle value;
operating the light source to project the light pattern modulated with the first control signal;
receiving information of light reflected by an outer object (1);
processing the information of reflected light to detect a first distance from the outer object;
obtain a vehicle speed;
calculate a new distance using the vehicle speed;
operating the driver element to create a further control signal configured to modulate the light pattern with a further frequency, a further amplitude lower than the previous amplitude and a further duty cycle value which is higher than the previous duty cycle value;
repeating the steps of operating the light source with the further control signal, receiving information and processing information to detect the presence of the outer object.

2. Method according to claim 1, further comprising the steps of
when the calculated distance is lower than a threshold value, modify the calculation of the further control signal, when the new further control signal has a frequency higher than the first frequency, an amplitude lower than the previous amplitude and a duty cycle value higher than the previous duty cycle value.

3. Method according to claim 2, wherein the threshold value is comprised between 80% and 90% of the first distance.

4. Method according to any of claims 2 or 3, wherein the relation (5) between the amplitude and the distance in the new further control signal is provided by the quotient of the new distance divide by the first distance raised to a first power value.

5. Method according to claim 4, wherein the first power value is comprised between 2 and 8.

**6.** Method according to any of the preceding claims, wherein the relation (4) between the amplitude and the distance in the further control signal is provided by the quotient of the new distance divide by the first distance raised to a second power value, wherein the second power value is higher than the first power value.

**7.** Method according to claim 6, wherein the second power value is comprised between 12 and 20.

**8.** Method according to any of the preceding claims, wherein the amplitude and duty cycle of each control signal fulfils a relation so that the illuminance emitted by the lighting device is constant.

**9.** Method according to claim 8, wherein each cycle comprises a pattern code expressed by a series of digital pulses, and wherein the duty cycle is defined by replacing each digital pulse by a code which comprises a percentage of the digital pulse.

**10.** Method according to any of the preceding claims, wherein the first frequency is equal or greater than 10 MHz.

**11.** Automotive lighting device according to any of the preceding claims, wherein the lighting function is a passing beam lamp or a driving beam lamp.

**12.** Automotive lighting device (10) comprising

a solid-state light source configured to perform a lighting function;
a driver element configured to provide the solid-state light source with a light pattern modulated with a control signal, wherein the light pattern contributes to provide a lighting function;
a sensor element (3) configured to receive light emitted by the solid-state light source and reflected by an outer object (1); and
a control unit configured to process the information received by the sensor.

**13.** Automotive lighting device according to claim 12, wherein the solid-state light source comprises a blue electroluminescent element, preferably a blue LED chip and a wavelength conversion material, such as a phosphor.

FIG. 1

FIG. 2

FIG. 3

FIG. 4

**Europäisches Patentamt**
**European Patent Office**
**Office européen des brevets**

# EUROPEAN SEARCH REPORT

Application Number

**EP 23 17 7164**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHUOYU YIN ET AL: "A PIXEL RANGE GATED IMAGING SYSTEM FOR UNDERWATER VIEWING AND RANGE FINDING", PROCEEDINGS OF THE SYMPOSIUM ON AUTONOMOUS UNDERWATER VEHICLE TECHNOLOGY. WASHINGTON, JUNE 5 - 6, 1990; [PROCEEDINGS OF THE SYMPOSIUM ON AUTONOMOUS UNDERWATER VEHICLE TECHNOLOGY], NEW YORK, IEEE, US, vol. -, 5 June 1990 (1990-06-05), pages 280-285, XP000145941, | 1-4,6,8, 10,11,13 | INV. G01S7/48 G01S17/931 G01S17/42 G01S7/484 G01S17/58 |
| A | * abstract; figure 1 * <br> * page 284, left-hand column * | 5,7,9 | |
| Y | US 2015/226853 A1 (SEO HONG SEOK [KR] ET AL) 13 August 2015 (2015-08-13) | 1-4,6,8, 10,11 | |
| A | * paragraphs [0092] - [0094]; figure 6 * | 5,7,9 | |
| X | WO 2022/028819 A1 (ENVISICS LTD) 10 February 2022 (2022-02-10) * page 11, lines 16-17 * | 1-4,6,8, 10,11 | |
| X | US 2022/229183 A1 (CHANG YUNG PENG [TW] ET AL) 21 July 2022 (2022-07-21) | 12 | TECHNICAL FIELDS SEARCHED (IPC) <br><br> G01S |
| Y | * paragraph [0070] * <br> * paragraphs [0192] - [0195]; figures 1,8 * | 13 | |

The present search report has been drawn up for all claims

| Place of search | Date of completion of the search | Examiner |
|---|---|---|
| Munich | 25 January 2024 | Cortona, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

Europäisches Patentamt
European Patent Office
Office européen des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 23 17 7164

The Search Division considers that the present European patent application does not comply with the requirements of unity of invention and relates to several inventions or groups of inventions, namely:

1. claims: 1-11

   Method for detecting an outer object by an automotive lighting device comprising a solid-state light source and a driver for modulating the light source with a modulation signal so as to provide a lighting function. The method comprises the steps of operating the driver to create a first control signal modulating the light pattern with a first frequency, a first amplitude and a first duty cycle value; operating the light source with the first modulated control signal; receiving information of light reflected by an outer object; processing information of reflected light to detect a first distance from the outer object; obtain a vehicle speed; calculate a new distance using the vehicle speed; operating the driver to create a further modulation control signal with a further frequency, a further amplitude lower than the previous amplitude and a further duty cycle value which is higher than the previous duty cycle value.

   ---

2. claims: 12, 13

   Automotive lighting device with a solid-state light source that performs a lighting function; a driver which modulates the solid-state light source with a light pattern which provides a lighting function; a sensor element which receives light emitted by the light source and reflected by an outer object; and a control unit processing the information received by the sensor.

   ---

## ANNEX TO THE EUROPEAN SEARCH REPORT
## ON EUROPEAN PATENT APPLICATION NO.

EP 23 17 7164

This annex lists the patent family members relating to the patent documents cited in  the above-mentioned European search report.
The members are as contained in the European Patent Office EDP file on
The European Patent Office is in no way liable for these particulars which are merely given for the purpose of information.

25-01-2024

| Patent document cited in search report | | | Publication date | Patent family member(s) | | | Publication date |
|---|---|---|---|---|---|---|---|
| US 2015226853 | A1 | | 13-08-2015 | KR | 20150095033 | A | 20-08-2015 |
| | | | | US | 2015226853 | A1 | 13-08-2015 |
| WO 2022028819 | A1 | | 10-02-2022 | GB | 2600373 | A | 04-05-2022 |
| | | | | US | 2023280691 | A1 | 07-09-2023 |
| | | | | WO | 2022028819 | A1 | 10-02-2022 |
| US 2022229183 | A1 | | 21-07-2022 | EP | 3977169 | A1 | 06-04-2022 |
| | | | | TW | 202104926 | A | 01-02-2021 |
| | | | | US | 2022229183 | A1 | 21-07-2022 |
| | | | | WO | 2020243038 | A1 | 03-12-2020 |

EPO FORM P0459

For more details about this annex : see Official Journal of the European Patent Office, No. 12/82